# EUROPÄISCHE PATENTSCHRIFT

(11) **EP 2 596 037 B1**
(45) Veröffentlichungstag und Bekanntmachung des Hinweises auf die Patenterteilung: **20.08.2014**
(21) Anmeldenummer: 11748909.6
(22) Anmeldetag: 15.07.2011
(51) Int. Cl.: C08G 18/10, C08G 18/12, C08G 18/40, C08G 18/63, C08G 18/73, C08G 18/75, C09D 175/04

(54) **BINDEMITTELKOMBINATIONEN FÜR KONSTRUKTIVE TRINKWASSERROHRBESCHICHTUNGEN**
BINDER COMBINATIONS FOR STRUCTURAL DRINKING WATER PIPE COATINGS
COMBINAISONS DE LIANTS POUR REVÊTEMENTS STRUCTURAUX DE CONDUITES D'EAU POTABLE

(30) Priorität: 20.07.2010 DE 102010031682
(43) Veröffentlichungstag der Anmeldung: 29.05.2013
(73) Patentinhaber: Bayer Intellectual Property GmbH, 40789 Monheim (DE)
(72) Erfinder: WAMPRECHT, Christian, 41472 Neuss (DE)
(86) Internationale Anmeldenummer: PCT/EP2011/062183
(87) Internationale Veröffentlichungsnummer: WO 2012/010528

(56) Entgegenhaltungen:
- EP-A2- 0 275 908
- DE-A1-102005 047 562
- US-A1- 2008 145 696

## Beschreibung

Die vorliegende Erfindung betrifft Beschichtungssysteme zur Herstellung schnell trocknender konstruktiver Beschichtungen auf Basis von speziellen (cyclo)aliphatischen Prepolymeren und (cyclo)-aliphatischen Polyisocyanaten sowie aminofunktionellen Polyasparaginsäureestern als Härter.

Zweikomponenten-Beschichtungssysteme auf Polyurethan- oder Polyharnstoff Basis sind bekannt und werden in der Technik bereits eingesetzt. In der Regel enthalten sie eine flüssige Polyisocyanatkomponente und eine flüssige isocyanatreaktive Komponente. Durch Reaktion von Polyisocyanaten mit Aminen als isocyanatreaktive Komponente entstehen stark vernetzte Polyhamstoff-Beschichtungen. Primäre Amine und Isocyanate reagieren jedoch meistens sehr schnell miteinander. Typische Topf- oder Gelierzeiten betragen oft nur einige Sekunden bis wenige Minuten. Deshalb können solche Polyharnstoff-Beschichtungen nicht manuell, sondern nur mit speziellen Spritzapparaturen appliziert werden. Solche Beschichtungen besitzen jedoch ausgezeichnete physikalische und mechanische Eigenschaften.

Eine aus der Literatur bekannte Methode, diese hohe Reaktivität zu reduzieren, ist die Verwendung von Prepolymeren mit niedrigem NCO-Gehalt. Durch den Einsatz von NCO-funktionellen Prepolymeren in Kombination mit Aminen können flexible Polyharnstoffbeschichtungen hergestellt werden.

US-A 3 428 610 und US-A 4 463 126 offenbaren die Herstellung von Polyurethan/PolyharnstoffElastomeren durch Aushärtung von NCO-funktionellen Prepolymeren mit aromatischen Diaminen. Bevorzugt sind dies di-primäre aromatische Diamine, welche in ortho-Position zu jeder Aminogruppe mindestens einen Alkylsubstituenten mit 2-3 Kohlenstoffatomen und gegebenenfalls außerdem in weiteren ortho-Positionen zu den Aminogruppen Methylsubstituenten aufweisen, wie zum Beispiel Diethyltoluyldiamin (DETDA).

US-A 3 428 610 und US-A 4 463 126 beschreiben ein Verfahren zur Herstellung von lösemittelfreien elastischen Beschichtungen, bei dem auf Isophorondiisocyanat (IPDI) und Polyetherpolyolen basierende NCO-Prepolymere bei Raumtemperatur mit sterisch gehinderten di-primären aromatischen Diaminen ausgehärtet werden.

Von Nachteil ist bei solchen Systemen, dass die aromatischen Diamine zu starker Vergilbung neigen.

Eine weitere Möglichkeit, die Reaktion zwischen Polyisocyanaten und Aminen zu verzögern, ist die Verwendung von sekundären Aminen. EP-A 0 403 921, US-A 5 126 170 und WO 2007/039133 offenbaren die Bildung von Polyharnstoff-Beschichtungen durch Reaktion von Polyasparaginsäureestern mit Polyisocyanaten. Polyasparaginsäureester besitzen eine niedrige Viskosität und eine verringerte Reaktivität gegenüber Polyisocyanaten und können daher zur Herstellung lösemittelfreier Beschichtungsmittel mit verlängerten Topfzeiten eingesetzt werden. Ein zusätzlicher Vorteil von Polyasparaginsäureestern ist, dass die Produkte farblos sind.

Farblose, aliphatische Polyisocyanatprepolymere auf Basis von Polyetherpolyolen härten hingegen langsam mit Polyasparaginsäureestern, und die Beschichtungen besitzen oft eine klebrige Oberfläche. Polyisocyanatprepolymere gemäß WO 2007/039133 härten zwar mit Polyasparaginsäureestern schneller aus, jedoch werden akzeptable mechanische Endeigenschaften oft erst nach mehreren Stunden bis Tagen erreicht. Dabei ist vor allem die Zugfestigkeit der Beschichtungen verbesserungsbedürftig.

Das Dokument DE 10 2005 047 562 A1 offenbart zweikomponentige Beschichtungsmittel zur Herstellung von Polyharnstoffbeschichtungen, die ausreichend lange Topfzeiten aufweisen, um auch eine manuelle Applikation zu ermöglichen und mit denen sich klare gleichzeitig farblose, flexible Beschichtungen mit guten anwendungstechnischen Daten wie Elastizität und Härte herstellen lassen. Die Beispiele 1-4 von DE 10 2005 047 562 A1 beschreiben Zusammensetzungen, die von der Reaktion zwischen einem Isocyanat-Prepolymer und einem Polyasparaginsäureester erhalten werden. Das Isocyanat-Prepolymer wird aus Hexamethylendiisocyanat und einem Polypropylenglykol hergestellt.

Der vorliegenden Erfindung lag daher die Aufgabe zugrunde, zweikomponentige Beschichtungsmittel zur Herstellung von Polyharnstoffbeschichtungen bereitzustellen, die ausreichend lange Topfzeiten aufweisen, um auch eine manuelle Zweikomponenten-Applikation zu ermöglichen und mit denen sich schnell trocknende, klare und möglichst farbhelle konstruktive Beschichtungen mit guten anwendungstechnischen Daten wie Elastizität, Härte und Zugfestigkeit herstellen lassen.

Gelöst wurde diese Aufgabe nun durch die Kombination spezieller Allophanatpolyisocyanate mit Polyasparaginsäureestern.

Gegenstand der Erfindung sind daher Zweikomponenten-Beschichtungssysteme, wenigstens enthaltend
A) eine Polyisocyantkomponente, bestehend aus
   a. (cyclo)aliphatischen Isocyanatprepolymeren basierend auf (cyclo)aliphatischen Polyisocyanaten und mindestens einem füllstoffhaltigen Polyether auf Basis von Styrol-Acrylnitril-Copolymeren und/oder Polyharnstoffen,
   b. (cyclo)aliphatischen Polyisocyanaten
B) aminofunktionellen Polyasparaginsäureester der allgemeinen Formel (I) 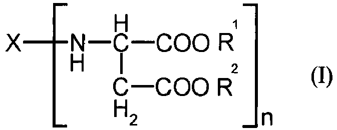 in der
   - X: für einen n-wertigen organischen Rest steht, der (formal) durch Entfernung der primären Aminogruppen eines n-wertigen Polyamins erhalten wird,
   - R¹, R²: für gleiche oder verschiedene organische Reste stehen, die unter den Reaktionsbedingungen gegenüber Isocyanatgruppen inert sind und
   - n: für eine ganze Zahl von mindestens 2 steht.

Die in Komponente A) eingesetzten (cyclo)aliphatischen Prepolymeren sind beispielsweise erhältlich, indem
a1) ein oder mehrere (cyclo)aliphatische Polyisocyanate mit
a2) einer oder mehreren Polyhydroxyverbindungen, wobei wenigstens eine ein füllstoffhaltiges Polyetherpolyol ist,
zu einem NCO-funktionellen Polyurethanprepolymer umgesetzt werden.

Beispiele für geeignete Polyisocyanate in a1) sind Polyisocyanate auf Basis von 1,4-Butandiisocyanat, 1,5-Pentandiisocyanat, 1,6-Hexandiisocyanat (Hexamethylendiisocyanat, HDI), 4-Isocyanatomethyl-1,8-octandiisocyanat (Triisocyanatononan, TIN) oder cyclische Systeme, wie 4,4'-Methylenbis(cyclohexylisocyanat), 3,5,5-Trimethyl-1-isocyanato-3-isocyanatomethylcyclohexan (Isophorondiisocyanat, IPDI) sowie ω.ω'-Diisocyanato-1,3-dimethylcyclohexan (H₆XDI).

Als Polyhydroxyverbindungen der Komponente a2) können alle dem Fachmann bekannten Polyhydroxyverbindungen eingesetzt werden, welche bevorzugt eine mittlere OH-Funktionalität von größer oder gleich 1,5 aufweisen, wobei wenigstens eine der in a2) enthaltenen Verbindungen ein füllstoffhaltiges Polyetherpolyol sein muss.

Geeignete in a2) einsetzbare Polyhydroxyverbindungen sind niedermolekulare Diole (z.B. 1,2-Ethandiol, 1,3- bzw. 1,2 Propandiol, 1,4-Butandiol), Triole (z.B. Glycerin, Trimethylolpropan) und Tetraole (z.B. Pentaerythrit), Polyetherpolyole, Polyesterpolyole, Polycarbonatpolyole sowie Polythioetherpolyole. Bevorzugt werden in a2) ausschließlich als Polyhydroxyverbindungen Substanzen der vorstehend genannten Art auf Polyetherbasis eingesetzt.

Bevorzugt weisen die in a2) eingesetzten füllstoffhaltigen Polyetherpolyole zahlenmittlere Molekulargewichte Mₙ von 1000 bis 20.000 g/mol, besonders bevorzugt 2000 bis 12000 g/mol, ganz besonders bevorzugt 3.000 bis 8.000 g/mol auf. Die OH-Funktionalitäten der eingesetzten füllstoffhaltigen Polyetherpolyole liegen zwischen ≥ 1,95 und ≤ 6,00, vorzugsweise zwischen ≥ 1,95 und ≤ 5,00, besonders bevorzugt zwischen ≥ 1,95 und ≤ 4,00 und ganz besonders bevorzugt bei 3,00.

Solche Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich.

Besonders geeignete Polyetherpolyole der Komponente sind solche der vorstehend genannten Art mit einem Gehalt an ungesättigten Endgruppen von kleiner oder gleich 0,02 Milliäquivalenten pro Gramm Polyol (meq/g), bevorzugt kleiner oder gleich 0,015 meq/g, besonders bevorzugt kleiner oder gleich 0,01 meq/g (Bestimmungsmethode ASTM D2849-69).

Derartige Polyetherpolyole sind in an sich bekannter Weise durch Alkoxylierung von geeigneten Starter-Molekülen, insbesondere unter Verwendung von Doppelmetallcyanid-Katalysatoren (DMC-Katalyse) herstellbar. Dies ist z.B. in der US-A 5 158 922 (z.B. Beispiel 30) und EP-A 0 654 302 (S. 5, Z. 26 bis S. 6, Z. 32) beschrieben.

Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können. Besonders bevorzugt sind Polyether mit einem Propylenoxidanteil von ≥ 75%. Ganz besonders bevorzugt sind Polyether auf Basis von Propylenoxid.

Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,2- und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehende beispielhafte genannten Art oder niedermolekulare Ethoxylierungs- oder Propoxylierungsprodukte derartiger einfacher Polyole oder beliebige Gemische derartiger modifizierter oder nicht modifizierter Alkohole.

Das besondere Merkmal der eingesetzten Polyetherpolyole ist, dass mindestens ein verwendetes Polyetherpolyol Füllstoffe fein dispergiert enthält und sedimentationsstabil ist. Geeignete Füllstoffe für diese speziellen Polyether sind beispielsweise organische Füllstoffe auf Basis von Styrol-Acrylnitril-Copolymeren oder Polyharnstoffen. Die organischen Füllstoffe können vorteilhaft in Gegenwart des füllstofffreien Grundpolyethers in diesem durch chemische Reaktion erzeugt werden. Eine solche Reaktion kann z. B. eine Copolymerisation von Acrylnitril mit Styrol in Gegenwart des Polyethers als Reaktionsmedium sein. Eine weitere geeignete chemische Reaktion ist die Umsetzung von Diaminen und/oder Hydrazin mit Diisocyanaten zu fein verteilten Harnstoffpartikeln in Gegenwart des füllstofffreien Grundpolyethers als Reaktionsmedium. Die Füllstoffe können jedoch auch separat hergestellt und mit speziellen Dispergiermaschinen unter Anwendung hoher Scherkräfte in die füllstofffreien Grundpolyether sedimentationsstabil eingearbeitet werden.

Die Herstellung der isocyanatgruppenhaltigen Polyurethanprepolymere erfolgt durch Umsetzung der Polyhydroxyverbindungen der Komponente a2) mit überschüssigen Mengen der Polyisocyanate aus a1). Die Umsetzung erfolgt im Allgemeinen bei Temperaturen von 20 bis 140°C, bevorzugt bei 40 bis 120°C, gegebenenfalls unter der Verwendung von aus der Polyurethanchemie an sich bekannten Katalysatoren wie beispielsweise Zinnverbindungen, z.B. Dibutylzinndilaurat, oder tertiären Aminen, z.B. Triethylamin oder Diazabicyclooctan. Bevorzugt ist jedoch die Reaktion von a1) und a2) ohne Verwendung von Katalysatoren.

Das Molverhältnis der OH-Gruppen der Verbindungen der Komponente a2) zu den NCO-Gruppen der Polyisocyanate aus a1) beträgt bevorzugt 1 : 1,5 bis 1 : 25, besonders bevorzugt 1 : 4 bis 1 : 22, ganz besonders bevorzugt 1 : 6 bis 1 : 18.

Gegebenenfalls können vor, während oder nach der Urethanisierung auch stabilisierend wirkende Zusätze verwendet werden. Dies können saure Additive wie Lewis-Säuren (Elektronenmangelverbindungen) oder Broenstedt-Säuren (Protonensäuren) oder solche Verbindungen sein, welche unter Reaktion mit Wasser derartige Säuren freisetzen.

Dies können beispielsweise auch anorganische oder organische Säuren oder auch neutrale Verbindungen wie Säurehalogenide oder Ester sein, welche mit Wasser zu den entsprechenden Säuren reagieren. Genannt seien hier insbesondere Salzsäure, Phosphorsäure, Phosphorsäureester, Benzoylchlorid, Isophtalsäuredichlorid, p-Toluolsulfonsäure, Ameisensäure, Essigsäure, Dichloressigsäure und 2-Chlorpropionsäure.

Die vorgenannten sauren Additive können auch zur Deaktivierung eventuell eingesetzter Katalysatoren eingesetzt werden. Sie verbessern darüber hinaus die Stabilität der erfindungsgemäß hergestellten Urethane, z.B. bei thermischer Belastung während einer eventuell notwendigen Dünnschichtdestillation oder auch nach der Herstellung bei Lagerung der Produkte.

Die sauren Additive werden in der Regel mindestens in einer solchen Menge zugegeben, dass das Molverhältnis der sauren Zentren des sauren Additivs und des Katalysators mindestens 1:1 1 beträgt. Vorzugsweise wird jedoch ein Überschuss des sauren Additivs zugesetzt, falls solche überhaupt zum Einsatz kommen.

Sofern überhaupt saure Additive verwendet werden, sind dies bevorzugt organische Säuren wie Carbonsäuren oder Säurehalogenide wie Benzoylchlorid oder Isophtalyldichlorid. Besonders bevorzugt werden keine sauren Additive eingesetzt.

Soll überschüssiges Diisocyanat abgetrennt werden, ist die Dünnschichtdestillation das bevorzugte Verfahren und wird in der Regel bei Temperaturen von 100 bis 160 °C und einem Druck von 0,01 bis 3 mbar durchgeführt. Der Restmonomergehalt beträgt danach bevorzugt weniger als 1 Gew.-%, besonders bevorzugt weniger als 0,5 Gew.-% (Diisocyanat).

Die gesamten Verfahrensschritte können gegebenenfalls in Anwesenheit inerter Lösungsmittel durchgeführt werden. Als inerte Lösungsmittel sind dabei solche zu verstehen, die unter den gegebenen Reaktionsbedingungen nicht mit den Edukten reagieren. Beispiele sind Ethylacetat, Butylacetat, Methoxypropylacetat, Methylethylketon, Methylisobutylketon, Toluol, Xylol, aromatische oder (cyclo)aliphatische Kohlenwasserstoffgemische oder beliebige Gemische derartiger Lösungsmittel. Bevorzugt werden die erfmdungsgemäßen Umsetzungen jedoch lösemittelfrei durchgeführt.

Die Zugabe der beteiligten Komponenten kann vor, während oder nach der Herstellung der isocyanatgruppenhaltigen Prepolymere in beliebiger Reihenfolge erfolgen. Bevorzugt ist jedoch die Zugabe des Polyetherpolyols a2) zum vorgelegten Polyisocyanat a1).

Bei der Polyisocyanatkomponente b) handelt es sich um aliphatische und/oder cycloaliphatische Polyisocyanate auf Basis von Di- oder Triisocyanaten wie Butandiisocyanat, Pentandiisocyanat, Hexandiisocyanat (Hexamethylendiisocyanat, HDI), 4-Isocyanatomethyl-1,8-octandiisocyanat (Triisocyanatononan, TIN) oder cyclische Systeme, wie 4,4'-Methylenbis(cyclohexylisocyanat), 3,5,5-Trimethyl-1-isocyanato-3-isocyanatomethylcyclohexan (Isophorondiisocyanat, IPDI) sowie ω.ω'-Diisocyanato-1,3 -dimethylcyclohexan (H₆XDI).

Bevorzugt werden in der Polyisocyanatkomponente b) Polyisocyanate auf Basis Hexandiisocyanat (Hexamethylendiisocyanat, HDI), 4,4'-Methylenbis(cyclohexylisocyanat) und/oder 3,5,5-Trimethyl-1-isocyanato-3-isocyanatomethylcyclohexan (Isophorondiisocyanat, IPDI) eingesetzt. Ein ganz besonders bevorzugtes Polyisocyanat ist HDI.

Als Polyisocyanate für b) kommen marktübliche Polyisocyanate, das heißt vor allem die bekannten Urethangruppen, Uretdiongruppen, Allophanatgruppen, Biuretgruppen, Isocyanuratgruppen und Iminooxadiazindiongruppen aufweisenden Modifizierungsprodukte der oben genannten einfachen Diisocyanaten in Betracht.

Zu den Urethangruppen aufweisenden Polyisocyanaten gehören z. B. die Umsetzungsprodukte von 1-Methyl-2,4- und gegebenenfalls 1-Methyl-2,6-diisocyanatocyclohexan mit unterschüssigen Mengen an Trimethylolpropan, bzw. dessen Gemischen mit einfachen Diolen, wie z. B. den isomeren Propanoder Butandiolen. Die Herstellung derartiger, Urethangruppen aufweisender Polyisocyanate in praktisch monomerfreier Form ist beispielsweise in der DE-A 1 090 196 beschrieben.

Zu den Biuretgruppen aufweisenden Polyisocyanaten gehören insbesondere jene auf Basis von 1,6-Diisocyanatohexan, deren Herstellung beispielsweise in EP-A 0 003 505, DE-A 1 101 394, US-A 3 358 010 oder US-A 3 903 127 beschrieben ist.

Zu den Isocyanuratgruppen aufweisenden Polyisocyanaten gehören insbesondere die Trimerisate bzw. Mischtrimerisate der oben beispielhaft genannten Diisocyanate, wie z. B. die aliphatischen bzw. die aliphatisch-cycloaliphatischen Trimerisate bzw. Mischtrimerisate auf Basis von 1,6-Diisocyanatohexan und/oder Isophorondiisocyanat, die beispielsweise gemäß US-A 4 324 879, US-A 4 288 586, DE-A 3 100 262, DE-A 3 100 263, DE-A 3 033 860 oder DE-A 3 144 672 erhältlich sind.

Zu den Iminooxadiazindiongruppen aufweisenden Polyisocyanaten gehören insbesondere die Trimerisate bzw. Mischtrimerisate der oben beispielhaft genannten Diisocyanate, wie z. B. die aliphatischen Trimerisate auf Basis von 1,6-Diisocyanatohexan, die beispielsweise gemäß EP-A 0 962 455, EP-A 0 962 454 oder EP-A 0 896 009 zugänglich sind.

Die erfindungsgemäß zum Einsatz gelangenden (cyclo)aliphatischen Polyisocyanate weisen im Allgemeinen einen Isocyanatgehalt von 5 bis 25 Gew.-%, eine mittlere NCO-Funktionalität von 2,0 bis 5,0, vorzugsweise 2,8 bis 4,0 und einen Restgehalt an, zu ihrer Herstellung eingesetzten, monomeren Diisocyanaten von unter 2 Gew.-%, vorzugsweise unter 0,5 Gew.-% auf. Selbstverständlich können auch beliebige Gemische der beispielhaft genannten Polyisocyanate zum Einsatz gelangen.

Die Polyisocyanate der Komponenten a1) und b) können dabei gleich oder verschieden sein. Vorzugsweise sind die Polyisocyanate der Komponenten a1) und b) gleich.

Die erfindungsgemäß in A) eingesetzten Polyisocyanatgemische aus a) und b) haben typischerweise Viskositäten bei 23°C von 500 bis 100.000 mPas, bevorzugt 500 bis 50.000 mPas und besonders bevorzugt von 750 bis 20.000 mPas, ganz besonders bevorzugt von 1.000 bis 10.000 mPas.

Als Kombinations- und Reaktionspartner für die Polyisocyanatgemische A) kommen aminofunktionelle Asparaginsäureester B) der nachfolgenden Formel (I) zum Einsatz.

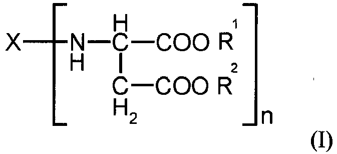

Die Gruppe X in Formel (I) der Polyasparaginsäureester der Komponente B) basiert bevorzugt auf einem n-wertigen Polyamin ausgewählt aus der Gruppe bestehend aus Ethylendiamin, 1,2-Diaminopropan, 1,4-Diaminobutan, 1,6-Diaminohexan, 2,5-Diamino-2,5-dimethylhexan, 2,2,4- und/oder 2,4,4-Trimethyl-1,6-diaminohexan, 1,11-Diaminoundecan, 1,12-Diaminododecan, 1-Amino-3,3,5-trimethyl-5-aminomethyl-cyclohexan, 2,4-und/oder 2,6-Hexahydrotoluylendiamin, 2,4'-und/oder 4,4'-Diamino-dicyclohexylmethan, 3,3-Dimethyl-4,4'-diamino-dicyclohexylmethan, 2,4,4'-Triamino-5-methyl-dicyclohexylmethan, und Polyetherpolyaminen mit aliphatisch gebundenen primären Aminogruppen mit einem zahlenmittleren Molekulargewicht Mₙ von 148 bis 6000 g/mol.

Besonders bevorzugt basiert die Gruppe X auf 1,4-Diaminobutan, 1,6-Diaminohexan, 2,2,4-und/oder 2,4,4-Trimethyl-1,6-diaminohexan, 1-Amino-3,3,5-trimethyl-5-aminomethyl-cyclohexan, 4,4'-Diamino-dicyclohexylmethan oder 3,3'-Dimethyl-4,4'-diamino-dicyclohexylmethan.

In Bezug auf die Reste R¹ und R² bedeutet "unter den Reaktionsbedingungen gegenüber Isocyanatgruppen inert", dass diese Reste keine Gruppen mit Zerewitinoff-aktivem Wasserstoff (CH-acide Verbindungen; vgl. Römpp Chemie Lexikon, Georg Thieme Verlag Stuttgart) wie OH, NH oder SH aufweisen.

Bevorzugt sind R¹ und R² unabhängig voneinander C₁ bis C₁₀-Alkylreste, besonders bevorzugt Methyl oder Ethylreste.

Für den Fall, dass X auf 2,4,4'-Triamino-5-methyl-dicyclohexylmethan basiert, sind bevorzugt R¹ = R² = Ethyl.

Bevorzugt ist n in Formel (I) eine ganze Zahl von 2 bis 6, besonders bevorzugt 2 bis 4.

Die Herstellung der aminofunktionellen Polyasparaginsäureester B) erfolgt in an sich bekannter Weise durch Umsetzung der entsprechenden primären Polyamine der Formel

X-[NH₂]ₙ

mit Malein- oder Fumarsäureestern der allgemeinen Formel

R¹OOC-CH=CH-COOR²

Geeignete Polyamine sind die oben als Basis für die Gruppe X genannten Diamine.

Beispiele geeigneter Malein- oder Fumarsäureester sind Maleinsäuredimethylester, Maleinsäurediethylester, Maleinsäuredibutylester und die entsprechenden Fumarsäureester.

Die Herstellung der aminofunktionellen Polyasparaginsäureester B) aus den genannten Ausgangsmaterialien erfolgt bevorzugt innerhalb des Temperaturbereichs von 0 bis 100°C, wobei die Ausgangsmaterialien in solchen Mengenverhältnissen eingesetzt werden, dass auf jede primäre Aminogruppe mindestens eine, vorzugsweise genau eine olefinische Doppelbindung entfällt, wobei im Anschluss an die Umsetzung gegebenenfalls im Überschuss eingesetzte Ausgangsmaterialien destillativ abgetrennt werden können. Die Umsetzung kann in Substanz oder in Gegenwart geeigneter Lösungsmittel wie Methanol, Ethanol, Propanol oder Dioxan oder Gemischen derartiger Lösungsmittel erfolgen.

In den erfindungsgemäßen Zweikomponenten-Beschichtungssystemen können sowohl einzelne aminofunktionelle Asparaginsäureester B) als auch Mischungen von mehreren aminofunktionellen Asparaginsäureestern eingesetzt werden. Darüber hinaus können weitere aminofunktionelle Verbindungen, wie z. B. Polyetherpolyaminen mit 2 bis 4, vorzugsweise 2 bis 3 und besonders bevorzugt 2 aliphatisch gebundenen primären Aminogruppen und einem zahlemnittleren Molekulargewicht Mₙ von 148 bis 12200, vorzugsweise 148 bis 8200, besonders bevorzugt 148 bis 4000 und ganz besonders bevorzugt 148 bis 2000 g/mol. Weitere geeignete aminofunktionelle Verbindungen als Vernetzer B) sind niedermolekulare aliphatische und oder cycloaliphatische Di- und Triamine, wie z. B. Ethylendiamin, 1,2-Diaminopropan, 1,4-Diaminobutan, 1,6-Diaminohexan, 2,5-Diamino-2,5-dimethylhexan, 2,2,4- und/oder 2,4,4-Trimethyl-1,6-diaminohexan, 1,11-Diaminoundecan, 1,12-Diaminododecan, 1-Amino-3,3,5-trimethyl-5-aminomethyl-cyclohexan, 2,4-und/oder 2,6-Hexa-hydrotoluylendiamin, 2,4'-und/oder 4,4'-Diamino-dicyclohexylmethan, 3,3'-Dimethyl-4,4'-diamino-dicyclohexylmethan, 2,4,4'-Triamino-5-methyl-dicyclohexylmethan und Polyclear 136^{®} (modifiziertes IPDA, BASF AG, Ludwigshafen) sowie gegebenenfalls blockierte aliphatische oder cycloaliphatische Polyamine, wie z. B. Ketimine oder Aldimine bis zu einer Menge von 50 Gew.-%, bezogen auf den Anteil an Asparaginsäureester in der Komponente B) mit verwendet werden, wodurch die Härte und auch die Steifigkeit der Beschichtung erhöht werden kann. Weiterhin können aromatische Di- und Triamine mit wenigstens einem Alkylsubstituent mit 1 bis 3 Kohlenstoffatomen am aromatischen Ring, wie z. B. 2,4-Toluylendiamin, 2,6-Toluylendiamin, 1-Methyl-3,5-diethyl-2,4-diaminobenzol, 1,3-Diethyl-2,4-diaminobenzol, 1-Methyl-3,5-diethyl-2,6-diamino-benzol, 1,3,5-Triethyl-2,6-diaminobenzol, 3,5,3',5'-Tetraethyl-4,4'-diaminodiphenylmethan, 3,3'-Dimethyl-4,4'-diaminodiphenylmethan, 1-Ethyl-2,4-diaminobenzol, 1-Ethyl-2,6-diaminobenzol, 2,6-Diethylnaphthylen-1,5-diamin in Mengen von bis zu 20 Gew.-%, vorzugsweise bis zu 10 Gew.-% und besonders bevorzugt bis zu 5 Gew-%, bezogen auf den Anteil an Asparaginsäureester in der Komponente B) mit verwendet werden, wodurch ebenfalls die Härte aber auch die Steifigkeit der Beschichtung erhöht werden kann. Das Verhältnis von freien und/oder blockierten Aminogruppen zu freien NCO-Gruppen beträgt in den erfindungsgemäßen Zweikomponenten-Beschichtungssystemen bevorzugt 0,5 : 1 bis 1,5 : 1, besonders bevorzugt 1:1 bis 1,5:1.

Zur Herstellung der erfindungsgemäßen Zweikomponenten-Beschichtungssysteme werden die Einzelkomponenten miteinander vermischt, wobei auch typische Additive, wie z. B. Verlaufsmittel, Dispergiermittel, Verdickungsmittel usw. sowie Pigmente und Füllstoffe, wie z. B. Titandioxid, Kreide, Schwerspat, Bariumsulfat usw. mit verwendet werden können.

Die genannten Beschichtungsmittel können mit den an sich bekannten Techniken wie Sprühen, Tauchen, Fluten, Rollen, Streichen oder Gießen auf Oberflächen appliziert werden. Nach dem Ablüften gegebenenfalls vorhandener Lösungsmittel, härten die Beschichtungen dann bei Umgebungsbedingungen oder auch bei höheren Temperaturen von beispielsweise 40 bis 200°C aus.

Die genannten Beschichtungsmittel können beispielsweise auf Metalle, Kunststoffe, Keramik, Glas, Beton sowie Naturstoffe aufgebracht werden, wobei die genannten Substrate zuvor einer gegebenenfalls notwendigen Vorbehandlung unterzogen worden sein können. Nach dem Aushärten der erfindungsgemäßen Beschichtungssysteme erhält man aufgrund ihrer hervorragenden mechanischen Eigenschaften ausgezeichnete konstruktive Beschichtungen auf den Substraten.

### Beispiele:

Die Bestimmung der NCO-Gehalte erfolgte durch Rücktitration von im Überschuss zugesetztem Din-butylamin mit Salzsäure. Die Viskositäten wurden mit einem Rotationsviskosimeter (Typ MCR 51) der Firma Anton Paar bei 23°C bestimmt.

Verwendete aliphatische Polyisocyanate:
Desmodur^{®} N 3400: Aliphatisches Polyisocyanat der Bayer MaterialScience AG auf Basis Hexamethylendiisocyanat mit einem NCO-Gehalt von 21,8 Gew.-%.
Desmodur^{®} N 3600: Aliphatisches Polyisocyanat der Bayer MaterialScience AG auf Basis Hexamethylendiisocyanat mit einem NCO-Gehalt von 23,0 Gew.-%.

Verwendete füllstoffhaltige Polyetherpolyole:
Desmophen^{®} 7619W: Hamstoffhaltiges Polyetherpolyol der Bayer MaterialScience AG auf Basis Propylenoxid und Ethylenoxid mit einer OH-Zahl von 28,5 mg KOH/g und einer Funktionalität von 3.
Desmophen^{®} 3699R: Styrol-Acrylnitril-Copolymerisat-haltiges Polyetherpolyol der Bayer MaterialScience AG auf Basis Propylenoxid und Ethylenoxid mit einer OH-Zahl von 29 mg KOH/g und einer Funktionalität von 3.

Soweit nicht anders angegeben, beziehen sich alle Prozentangaben auf das Gewicht.

### Herstellung Polyisocyanat A1)

In einem 5 Liter Reaktionskessel wurden 1230 g Desmophen^{®} 7619W unter Stickstoffatmosphäre vorgelegt und auf 60 °C erwärmt. Unter Rühren wurden innerhalb von 30 Minuten 1770 g Desmodur^{®} N 3400 zudosiert. Die Reaktionsmischung wurde danach so lange bei 60°C gerührt, bis ein NCO-Gehalt von ca. 12 % erreicht war. Dann wurde auf 30°C abgekühlt und das erhaltene Produkt in ein entsprechendes Gebinde unter Stickstoffbeschleierung abgefüllt.

Es wurde ein nicht transparentes, milchig aussehendes Produkt mit einem NCO-Gehalt von 12,1 % und einer Viskosität von 1740 mPas (23°C) erhalten.

### Herstellung Polyisocyanat A2)

Es wurde nach der gleichen Vorschrift wie bei Polyisocyanat A1) gearbeitet, jedoch wurde anstelle von Desmophen^{®} 7619W als Polyether Desmophen^{®} 3699R verwendet.

Es wurde ein nicht transparentes, milchig aussehendes Produkt mit einem NCO-Gehalt von 12,2 % und einer Viskosität von 1330 mPas (23°C) erhalten.

### Herstellung Polyisocyanat A3)

Es wurde nach der gleichen Vorschrift wie bei Polyisocyanat A1) gearbeitet, jedoch wurde anstelle von Desmodur^{®} N 3400, Desmodur^{®} N 3600 verwendet und die Reaktion bei einer Temperatur von 80 °C durchgeführt.

Es wurde ein nicht transparentes, milchig aussehendes Produkt mit einem NCO-Gehalt von 12,5 % und einer Viskosität von 5020 mPas (23°C) erhalten.

### Herstellung Polyisocyanat A4)

Es wurde nach der gleichen Vorschrift wie bei Polyisocyanat A2) gearbeitet, jedoch wurde anstelle von Desmodur^{®} N 3400, Desmodur^{®} N 3600 verwendet und die Reaktion bei einer Temperatur von 80 °C durchgeführt.

Es wurde ein nicht transparentes, milchig aussehendes Produkt mit einem NCO-Gehalt von 12,6 % und einer Viskosität von 3800 mPas (23°C) erhalten.

### Herstellung Polyasparaginsäureester B1)

344 g (2 mol) Maleinsäurediethylester wurden bei 50°C unter Rühren zu 210 g (2 Äq.) 4,4'-Diaminodicyclohexylmethan getropft. Nach vollständiger Zugabe ließ man 90 h bei 60°C unter N₂-Atmosphäre nachrühren und entwässerte während der letzten beiden Stunden bei 1 mbar. Es wurde ein flüssiges Produkt mit einem Äquivalentgewicht von 277 g erhalten.

### Herstellung Polyasparaginsäureester B2)

344 g (2 mol) Maleinsäurediethylester wurden bei 50°C unter Rühren zu 238 g (2 Äq.) 3,3'-Dimethyl-4,4'-diaminodicyclohexylmethan getropft. Nach vollständiger Zugabe ließ man 90 h bei 60°C unter N₂-Atmosphäre nachrühren und entwässerte während der letzten beiden Stunden bei 1 mbar. Es wurde ein flüssiges Produkt mit einem Äquivalentgewicht von 291 g erhalten.

### Herstellung Polyasparaginsäureester B3)

344 g (2 mol) Maleinsäurediethylester wurden bei 50°C unter Rühren zu 116 g (2 Äq.) 2-Methylpentanmethylendiamin-1,5 getropft. Nach vollständiger Zugabe ließ man 90 h bei 60°C unter N₂-Atmosphäre nachrühren und entwässerte während der letzten beiden Stunden bei 1 mbar. Es wurde ein flüssiges Produkt mit einem Äquivalentgewicht von 234 g erhalten.

### Herstellung eines aliphatischen Prepolymers mit einem füllstoff-freien Polyether als (Vergleich 1)

Es wurde nach der gleichen Vorschrift wie bei Polyisocyanat A4) gearbeitet, jedoch wurde anstelle von Desmophen^{®} 3699R 1288 g eines entsprechenden füllstofffreien Polyethers auf Basis von Propylenoxid und Ethylenoxid mit Funktionalität 3 und einer OH-Zahl von 35 mg KOH/g verwendet und mit 1712 g Desmodur^{®} N 3600 bei 80 °C umgesetzt.

Es wurde ein transparentes Produkt mit einem NCO-Gehalt von 12,3 % und einer Viskosität von 1890 mPas (23°C) erhalten.

### Herstellung eines aliphatischen, allophanatgruppenhaltigen Prepolymers ohne Füllstoffe (Vergleich 2)

Zu 2520,7 g 1,6-Hexandiisocyanat wurden zunächst 90 mg Isophtalsäuredichlorid gegeben, danach wurde die Mischung unter Rühren auf 100°C erwärmt. Nun wurden innerhalb von 3 Stunden 1978,5 g eines Polypropylenglycols zugegeben, welcher mittels DMC-Katalyse (Basen-frei) hergestellt worden war (Gehalt ungesättigter Gruppen < 0,01 meq/g, Molgewicht 2000 g/mol, OH-Zahl 56, theoretische Funktionalität 2). Die Reaktionsmischung wurde danach solange auf 100°C erwärmt, bis ein NCO-Gehalt von 26,1 % erreicht war. Nun wurde die Temperatur auf 90°C vermindert und die Reaktionsmischung nach Zugabe von 360 mg Zink(II)bis(2-ethylhexanoat) solange gerührt, bis der NCO-Gehalt bei 24,3 % lag. Nach Zugabe von 360 mg Isophtalsäuredichlorid wurde das überschüssige 1,6-Hexandiisocyanat bei 0,5 mbar und 140°C mittels Dünnschichtdestillation entfernt.

Es wurde ein klares, farbloses Produkt mit einem NCO-Gehalt von 5,9 %, einer Viskosität von 2070 mPas (23°C) und einem Restgehalt an freiem HDI von < 0,03 % erhalten.

### Herstellung von Beschichtungen

Die Polyisocyanate A3) und A4) wurden bei Raumtemperatur mit dem aminofunktionellen Polyasparaginsäureester B3) bzw. mit Mischungen aus den aminofunktionellen Polyasparaginsäureestern B2) und B3) gemischt, wobei ein NCO/NH Verhältnis von 1,1 : 1 eingehalten wurde. Mit einem 150 µm Rakel wurden danach entsprechende Filme auf eine Glasplatte aufgetragen. Die Zusammensetzung und Eigenschaften der Beschichtungen sind in der Tabelle 1 zusammengefasst.

**Tabelle 1: Beispiele 1 bis 4. V1 und V2 - Zusammensetzungen und Eigenschaften der Filme**

| **Beispiele** | **1** | **2** | **3** | **4** | **V1** | **V2** |
|---|---|---|---|---|---|---|
| Polyasparaginsäureester B2 [g] | - | - | 50,0 | 50,0 | 50,0 | 50,0 |
| Polyasparaginsäureester B3 [g] | 100,0 | 100,0 | 50,0 | 50,0 | 50,0 | 50,0 |
| Polyisocyanat A3) [g] | 160,3 | | 144,9 | - | - | - |
| Polyisocyanat A4) [g] | - | 157,9 | - | 143,6 | - | - |
| Füllstoff-freies Prepolymer V1 [g] | | | | | 147,1 | - |
| Allophanathaltiges Prepolymer V2 [g] | | | | | - | 307,0 |
| NH:NCO | 1: 1,1 | 1:1,1 | 1:1,1 | 1:1,1 | 1:1,1 | 1:1,1 |
| **Topfzeit** | 20 min | 21 min | 20 min | 22 min | 24 min | 23 min |
| Pendelhärte: (150µm Nassfilm) | | | | | | |
| nach 7d | 63" | 62" | 70" | 68" | 52" | 50" |
| **Shore-Härte D: DIN 53505** | | | | | | |
| nach 7d | 53 | 53 | 59 | 57 | 45 | 41 |
| **Zugfestigkeit ISO EN 527:** | | | | | | |
| Bruchspannung: (MPa) | 15,3 | 14,5 | 18,5 | 16,9 | 10,4 | 11,6 |
| Std.-Abw. | 0,3 | 0,1 | 0,1 | 0,2 | 0,3 | 0,4 |
| nominelle Bruchdehnung: (%) | 81 | 47 | 52 | 19 | 82 | 78 |
| Std.-Abw. | 6,5 | 5,2 | 3,7 | 4,8 | 4,5 | 3,8 |

Die Polyisocyanate A3) und A4) auf Basis füllstoflhaltiger Polyether liefern in Kombination mit aminofunktionellen Polyasparaginsäureester Beschichtungssysteme mit ausreichender Topfzeit. Die Beschichtungen haben nach Trocknung eine hohe Härte, eine gute Bruchdehnung sowie eine hohe Bruchspannung und eignen sich daher besonders gut für konstruktive Beschichtungen. Mit entsprechenden füllstofffreien Polyisocyanaten V1 und V2 können diese guten mechanischen Werte nicht erreicht werden. Sowohl die Härte als auch die Bruchspannung der füllstofffreien Beschichtungen ist geringer.

## Patentansprüche

1. Zweikomponenten-Beschichtungssysteme, enthaltend
A) eine Polyisocyanatkomponente, bestehend aus
a. (cyclo)aliphatischen Isocyanatprepolymeren basierend auf (cyclo)aliphatischen Polyisocyanaten und mindestens einem füllstoffhaltigen Polyether auf Basis von Styrol-Acrylnitril-Copolymeren und/oder Polyharnstoffen,
b. (cyclo)aliphatischen Polyisocyanaten
B) aminofunktionellen Polyasparaginsäureester der allgemeinen Formel (I) 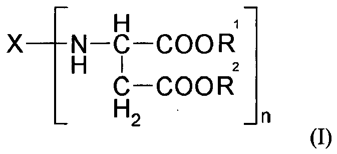 in der
X für einen n-wertigen organischen Rest steht, der durch Entfernung der primären Aminogruppen eines n-wertigen Polyamins erhalten wird,
R¹, R² für gleiche oder verschiedene organische Reste stehen, die unter den Reaktionsbedingungen gegenüber Isocyanatgruppen inert sind und
n für eine ganze Zahl von mindestens 2 steht,
wobei bis zu 50 Gew.-% der aminofunktionellen Polyasparaginsäureester der allgemeinen Formel (I) durch aminofunktionelle Polyether, kurzkettige (cyclo)aliphatische Diamine und/oder gegebenenfalls blockierte (cyclo)aliphatische Polyamine sowie durch aromatische Di- und Polyamine ersetzt werden können, wobei der Anteil an aromatischen Di- und Polyaminen ≤ 20 Gew.-% bezogen auf den Anteil der aminofunktionellen Polyasparaginsäureester beträgt.

2. Zweikomponenten-Beschichtungssysteme gemäß Anspruch 1, **dadurch gekennzeichnet, dass** die in A) eingesetzten Polyisocyanate hergestellt werden, indem eine oder mehrere Polyhydroxyverbindungen, wobei wenigstens eine ein Polyetherpolyol ist, das fein dispergierte Füllstoffe enthält, mit einer überschüssigen Menge eines (cyclo)aliphatischen Polyisocyanats b) zu einem NCO-funktionellen Polyurethan-Prepolymer a) umgesetzt wird und danach eine Mischung aus füllstoffhaltigem NCO-funktionellem Polyurethan-Prepolymer a) und Polyisocyanatkomponente b) vorliegt.

3. Zweikomponenten-Beschichtungssysteme gemäß Anspruch 2, **dadurch gekennzeichnet, dass** bei der Herstellung der in A) eingesetzten NCO-funktionellen Polyurethan-Prepolymeren a) füllstoffhaltige Polyetherpolyole mit Füllstoffen auf Basis von Copolymeren aus Styrol und Acrylnitril eingesetzt werden.

4. Zweikomponenten-Beschichtungssysteme gemäß Anspruch 2, **dadurch gekennzeichnet, dass** bei der Herstellung der in A) eingesetzten NCO-funktionellen Polyurethan-Prepolymeren a) füllstoffhaltige Polyetherpolyole mit Füllstoffen auf Basis von harnstoffhaltigen Umsetzungsprodukten aus Hydrazin und Toluylendiisocyanat eingesetzt werden.

5. Zweikomponenten-Beschichtungssysteme gemäß einem der Ansprüche 2 bis 4, **dadurch gekennzeichnet, dass** bei der Herstellung der in A) eingesetzten Polyisocyanate b) aliphatische Polyisocyanate eingesetzt werden.

6. Zweikomponenten-Beschichtungssysteme gemäß einem der Ansprüche 2 bis 4, **dadurch gekennzeichnet, dass** bei der Herstellung der in A) eingesetzten Polyisocyanate b) cycloaliphatische Polyisocyanate eingesetzt werden.

7. Zweikomponenten-Beschichtungssysteme gemäß einem der Ansprüche 2 bis 4, **dadurch gekennzeichnet, dass** bei der Herstellung der in A) eingesetzten Polyisocyanate b) Gemische aus aliphatischen und cycloaliphatischen Polyisocyanaten eingesetzt werden.

8. Zweikomponenten-Beschichtungssysteme gemäß den Ansprüchen 1 bis 5, **dadurch gekennzeichnet, dass** als Polyisocyanatkomponente b) Polyisocyanate auf Basis von Hexamethylendiisocyanat eingesetzt werden.

9. Konstruktive Beschichtungen, erhältlich aus Zweikomponenten-Beschichtungssystemen gemäß einem der Ansprüche 1 bis 8.

10. Substrate, beschichtet mit Beschichtungen gemäß Anspruch 9.

## Claims

1. Two-component coating systems, comprising
A) a polyisocyanate component consisting of
a. (cyclo)aliphatic isocyanate prepolymers based on (cyclo)aliphatic polyisocyanates and at least one filler-containing polyether based on styrene-acrylonitrile copolymers and/or polyureas,
b. (cyclo)aliphatic polyisocyanates,
B) amino-functional polyaspartic acid esters of the general formula (I) 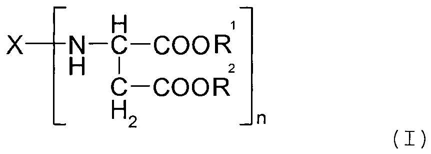 in which
X represents an n-valent organic radical which is obtained by removing the primary amino groups of an n-valent polyamine,
R¹, R² represent identical or different organic radicals which are inert to isocyanate groups under the reaction conditions, and
n represents an integer of at least 2,
wherein up to 50 wt.% of the amino-functional polyaspartic acid esters of the general formula (I) can be replaced by amino-functional polyethers, short-chained (cyclo)aliphatic diamines and/or optionally blocked (cyclo)aliphatic polyamines as well as by aromatic di- and poly-amines, wherein the amount of aromatic di- and poly-amines is ≤ 20 wt.%, based on the amount of amino-functional polyaspartic acid esters.

2. Two-component coating systems according to claim 1, **characterised in that** the polyisocyanates used in A) are prepared by reacting one or more polyhydroxy compounds, wherein at least one is a polyether polyol containing finely dispersed fillers, with an excess amount of a (cyclo)aliphatic polyisocyanate b) to give an NCO-functional polyurethane prepolymer a), and a mixture of filler-containing NCO-functional polyurethane prepolymer a) and polyisocyanate component b) is then present.

3. Two-component coating systems according to claim 2, **characterised in that**, in the preparation of the NCO-functional polyurethane prepolymers a) used in A), filler-containing polyether polyols with fillers based on copolymers of styrene and acrylonitrile are used.

4. Two-component coating systems according to claim 2, **characterised in that**, in the preparation of the NCO-functional polyurethane prepolymers a) used in A), filler-containing polyether polyols with fillers based on urea-containing reaction products of hydrazine and toluene diisocyanate are used.

5. Two-component coating systems according to any one of claims 2 to 4, **characterised in that**, in the preparation of the polyisocyanates b) used in A), aliphatic polyisocyanates are used.

6. Two-component coating systems according to any one of claims 2 to 4, **characterised in that**, in the preparation of the polyisocyanates b) used in A), cycloaliphatic polyisocyanates are used.

7. Two-component coating systems according to any one of claims 2 to 4, **characterised in that**, in the preparation of the polyisocyanates b) used in A), mixtures of aliphatic and cycloaliphatic polyisocyanates are used.

8. Two-component coating systems according to claims 1 to 5, **characterised in that** there are used as the polyisocyanate component b) polyisocyanates based on hexamethylene diisocyanate.

9. Structural coatings obtainable from two-component coating systems according to any one of claims 1 to 8.

10. Substrates coated with coatings according to claim 9.

## Revendications

1. Systèmes de revêtement à deux composants, contenant
A) un composant polyisocyanate, constitué par
a. des prépolymères d'isocyanate (cyclo)aliphatiques, à base de polyisocyanates (cyclo)aliphatiques et d'au moins un polyéther, contenant des charges, à base de copolymères de styrène-acrylonitrile et/ou de polyurées,
b. des polyisocyanates (cyclo)aliphatiques
B) des poly(esters de l'acide aspartique) à fonctionnalité amino de formule générale (I) 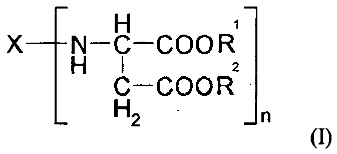 dans laquelle
X représente un radical organique n-valent, qui est obtenu par élimination des groupes amino primaires d'une polyamine n-valente,
R¹, R² représentent des radicaux organiques identiques ou différents qui sont inertes par rapport aux groupes isocyanate dans les conditions de réaction et
n représente un nombre entier d'au moins 2,
jusqu'à 50% en poids des poly(esters de l'acide aspartique) à fonctionnalité amino de formule générale (I) pouvant être remplacés par des polyéthers à fonctionnalité amino, des diamines (cyclo)aliphatiques à courte chaîne et/ou des polyamines (cyclo)aliphatiques le cas échéant bloquées ainsi que par des diamines et des polyamines aromatiques, la proportion de diamines et de polyamines aromatiques étant ≤ 20% en poids par rapport à la proportion de poly(esters de l'acide aspartique) à fonctionnalité amino.

2. Systèmes de revêtement à deux composants selon la revendication 1, **caractérisés en ce que** les polyisocyanates utilisés dans A) sont préparés **en ce qu'**on transforme un ou plusieurs composés à fonctionnalité polyhydroxy, dont au moins un est un polyétherpolyol qui contient des charges finement dispersées, avec une quantité en excès d'un polyisocyanate (cyclo)aliphatique b) en un prépolymère de polyuréthane à fonctionnalité NCO a) et on est ensuite en présence d'un mélange de prépolymère de polyuréthane à fonctionnalité NCO a) contenant des charges et de composant polyisocyanate b).

3. Systèmes de revêtement à deux composants selon la revendication 2, **caractérisés en ce que**, lors de la préparation des prépolymères de polyuréthane à fonctionnalité NCO a) utilisés dans A), on utilise des polyétherpolyols contenant des charges, présentant des charges à base de copolymères de styrène et d'acrylonitrile.

4. Systèmes de revêtement à deux composants selon la revendication 2, **caractérisés en ce que**, lors de la préparation des prépolymères de polyuréthane à fonctionnalité NCO a) utilisés dans A), on utilise des polyétherpolyols contenant des charges, présentant des charges à base de produits de transformation, contenant de l'urée, d'hydrazine et de diisocyanate de toluylène.

5. Systèmes de revêtement à deux composants selon l'une quelconque des revendications 2 à 4, **caractérisés en ce qu'**on utilise, lors de la préparation des polyisocyanates b) utilisés dans A), des polyisocyanates aliphatiques.

6. Systèmes de revêtement à deux composants selon l'une quelconque des revendications 2 à 4, **caractérisés en ce qu'**on utilise, lors de la préparation des polyisocyanates b) utilisés dans A), des polyisocyanates cycloaliphatiques.

7. Systèmes de revêtement à deux composants selon l'une quelconque des revendications 2 à 4, **caractérisés en ce qu'**on utilise, lors de la préparation des polyisocyanates b) utilisés dans A), des mélanges de polyisocyanates aliphatiques et cycloaliphatiques.

8. Systèmes de revêtement à deux composants selon les revendications 1 à 5, **caractérisés en ce qu'**on utilise, comme composant polyisocyanate b), des polyisocyanates à base de diisocyanate d'hexaméthylène.

9. Revêtements constructifs pouvant être obtenus à partir de systèmes de revêtement à deux composants selon l'une quelconque des revendications 1 à 8.

10. Substrats, revêtus par des revêtements selon la revendication 9.
